(19) Europäisches Patentamt
European Patent Office
Office européen des brevets

(11) EP 2 986 580 B1

(12) # EUROPÄISCHE PATENTSCHRIFT

(45) Veröffentlichungstag und Bekanntmachung des Hinweises auf die Patenterteilung:
**03.01.2018 Patentblatt 2018/01**

(21) Anmeldenummer: **14715607.9**

(22) Anmeldetag: **07.04.2014**

(51) Int Cl.:
***C04B 16/04*** (2006.01) ***C08G 81/02*** (2006.01)
***C09K 8/00*** (2006.01) ***C08F 8/14*** (2006.01)
***C04B 28/02*** (2006.01) ***C08F 220/28*** (2006.01)

(86) Internationale Anmeldenummer:
**PCT/EP2014/056943**

(87) Internationale Veröffentlichungsnummer:
**WO 2014/170159 (23.10.2014 Gazette 2014/43)**

(54) **VERWENDUNG VON KAMMPOLYMEREN ZUR KONTROLLE DER RHEOLOGIE VON MINERALISCHEN BINDEMITTELZUSAMMENSETZUNGEN**

USE OF COMB POLYMERS FOR CONTROLLING THE RHEOLOGY OF MINERAL BINDER COMPOSITIONS

UTILISATION DE POLYMÈRES EN PEIGNE POUR LE CONTRÔLE DE LA RHÉOLOGIE DE COMPOSITIONS MINÉRALES DE LIANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2013 EP 13164078**

(43) Veröffentlichungstag der Anmeldung:
**24.02.2016 Patentblatt 2016/08**

(73) Patentinhaber: **Sika Technology AG**
**6340 Baar (CH)**

(72) Erfinder:
- **FRUNZ, Lukas**
  **CH-8305 Dietlikon (CH)**
- **LORCET, Loic**
  **76220 Gournay en Bray (FR)**
- **ZIMMERMANN, Jörg**
  **CH-8400 Winterthur (CH)**
- **PETRIOL, Pierre**
  **76000 Rouen (FR)**
- **GUEVILLE, Julien**
  **76220 Beauvoir en Lyons (FR)**
- **DE CARVALHO, Walter**
  **F-78980 Saint Illiers le bois (FR)**

(74) Vertreter: **Sika Patent Attorneys**
**c/o Sika Technology AG**
**Corp. IP Dept.**
**Tüffenwies 16**
**Postfach**
**8048 Zürich (CH)**

(56) Entgegenhaltungen:
**EP-A1- 2 065 403**
**EP-A1- 2 463 314**
**EP-A1- 2 535 362**
**JP-A- 2004 137 130**
**US-A1- 2012 095 134**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

### Technisches Gebiet

Die Erfindung betrifft die Verwendung eines Kammpolymers zur Erhöhung der Fliessgeschwindigkeit und/oder zur Reduktion der Viskosität einer mineralischen Bindemittelzusammensetzung. Ein weiterer Aspekt der Erfindung betrifft eine mineralische Bindemittelzusammensetzung sowie einen ausgehärteten Formkörper enthaltend das Kammpolymer.

### Stand der Technik

Dispergiermittel oder Fliessmittel werden in der Bauindustrie als Verflüssiger oder wasserreduzierende Mittel für Bindemittelzusammensetzungen, wie z.B. Beton, Mörtel, Zemente, Gipse und Kalk, eingesetzt. Die Dispergiermittel sind im Allgemeinen organische Polymere, welche dem Anmachwasser zugesetzt oder als Feststoff den Bindemittelzusammensetzungen beigefügt werden. Dadurch können sowohl die Konsistenz Bindemittelzusammensetzung während der Verarbeitung als auch die Eigenschaften in ausgehärtetem Zustand in vorteilhafter Weise verändert werden.

Die Wahl und Dosierung eines geeigneten Dispergiermittels hängt insbesondere von der spezifischen Zusammensetzung, der Verarbeitungstechnik oder dem Einsatzzweck der Bindemittelzusammensetzung ab. Gerade bei speziellen Bindemittelzusammensetzungen, wie z.B. Spezialbetonen oder Spezialmörteln, stellt dies eine anspruchsvolle Aufgabe dar.

Zu den Spezialbetonen gehört z.B. sogenannt "selbstverdichtender Beton" (Engl. Self-Compacting Concrete). Selbstverdichtender Beton weist ein einzigartiges Fliessvermögen und Eigenverdichtungsverhalten auf. So fliesst selbstverdichtender Beton rasch und entmischungsfrei rein aufgrund der Schwerkraft, füllt Hohlräume selbständig aus und entlüftet ohne Aufbringen von Verdichtungsenergie. Ein Vibrieren wie bei herkömmlichem Beton ist somit nicht notwendig. Selbstverdichtender Beton ist daher im Besonderen vorteilhaft wenn hohe Einbauleistungen gefragt sind, bei anspruchsvollen geometrischen Formen, bei engmaschiger Bewehrung, bei geringen Bauteilstärken oder in Situationen, in welchen ein Aufbringen von zusätzlicher Verdichtungsenergie nur schwer oder gar nicht möglich ist. Selbstverdichtender Beton weist im Vergleich zu gewöhnlichen Beton typischerweise eine veränderte Sieblinie und/oder einen höheren Mehlkorngehalt auf.

Bei selbstverdichtendem Beton werden optimale Verarbeitungseigenschaften nur erreicht, wenn sowohl die Fliessgrenze oder das Setzfliessmass als auch die Viskosität oder die Fliessgeschwindigkeit des Betons zugleich jeweils in bestimmten Bereichen eingestellt werden. Andernfalls kann es leicht zur Entmischung bzw. Separation der Betonbestandteile kommen, es kann ein unzureichendes Fliessverhalten bzw. Stagnation resultieren oder es treten unerwünschte Lufteinschlüsse auf.

Die Wahl eines geeigneten Dispergiermittels und dessen Dosierung in selbstverdichtendem Beton ist daher nicht trivial. In der Praxis werden üblicherweise Hochleistungsverflüssiger in Form von Polycarboxylatethern eingesetzt.

Die WO 2009/044046 offenbart in diesem Zusammenhang z.B. Dispergiermittel auf Basis von Polycarboxylat basierten Kammpolymeren mit welchen sich unter anderem die Viskositäten von selbstnivellierenden Bindemittelzusammensetzungen reduzieren lassen. Die Kammpolymere weisen dabei speziell hydrophobe Gruppen in den Seitenketten auf. US 2012/0095134 A1 beschreibt die Verwendung von speziellen Polymeren zu Verbesserung der Viskosität von hydraulischen Zusammensetzungen, unter anderem im Zusammenhang mit selbstverdichtenden Beton. Dabei zur Reduktion der Viskosität von hydraulischen Zusammensetzungen werden Kammpolymere mit speziellen hydrophoben Gruppen verwendet. Viele der bekannten Dispergiermittel vermögen jedoch nicht vollständig zu überzeugen. Einerseits beeinflussen bekannte Dispergiermittel häufig sowohl das Setzfliessmass als auch die Fliessgeschwindigkeit der mineralischen Bindemittelzusammensetzung zugleich. Eine gezielte Erhöhung der Fliessgeschwindingkeit von mineralischen Bindemittelzusammensetzung, ohne dabei die Fliessgrenze oder das Setzmass zu verändern, ist somit kaum möglich. Andere Dispergiermittel verlangen nach speziellen chemischen Gruppen oder komplizierten chemischen Strukturen, was wiederum die Herstellung kompliziert und teuer macht.

Es besteht daher nach wie vor Bedarf nach verbesserten Dispergiermitteln, welche die genannten Nachteile nicht aufweisen.

### Darstellung der Erfindung

Aufgabe der vorliegenden Erfindung ist es daher, ein Dispergiermittel bereit zu stellen, welches eine gezielte Erhöhung der Fliessgeschwindigkeit und/oder eine Reduktion der Viskosität von mineralischen Bindemittelzusammensetzungen ermöglicht. Nach Möglichkeit sollen dabei weitere Eigenschaften der mineralischen Bindemittelzusammensetzungen, insbesondere das Setzmass oder die Fliessgrenze, möglichst unverändert bleiben. Bevorzugt soll das Dispergiermittel zudem mit anderen Zusatzmitteln verwendbar sein. Das Dispergiermittel soll insbesondere für selbstverdichtenden Beton geeignet sein.

Überraschenderweise wurde gefunden, dass die Aufgabe durch die Merkmale des unabhängigen Anspruchs 1 gelöst werden.

Der Kern der Erfindung liegt in der Verwendung eines Kammpolymers zur Erhöhung der Fliessgeschwindigkeit und/oder Reduktion der Viskosität einer mineralischen Bindemittelzusammensetzung, wobei das Kammpolymer eine Hauptkette umfassend Säuregruppen aufweist und an der Hauptkette Seitenketten angebunden sind, und wobei ein durchschnittliches zahlengemitteltes Molekulargewicht ($M_n$) sämtlicher Seitenketten 120-1'000 g/mol beträgt, und ein Molverhältnis der Säuregruppen zu den Seitenketten im Bereich von 0.5 - 2 liegt.

Wie sich gezeigt hat, sind bei Verwendung der erfindungsgemässen Kammpolymere mineralische Bindemittelzusammensetzungen, z.B. in Form von selbstverdichtendem Beton, mit stark verbesserter Füllfähigkeit und Fliessgeschwindigkeit erhältlich. Dies ohne dass eine signifikante Entmischungen oder Separationen der Bindemittelzusammensetzungen oder Lufteinschlüsse auftreten. Überraschend ist insbesondere auch, dass trotz der Erhöhung der Fliessgeschwindigkeit die Fliessgrenze der Bindemittelzusammensetzungen durch die verwendeten Kammpolymere im Wesentlichen nicht beeinflusst wird.

Zudem wurde gefunden, dass die erfindungsgemäss verwendeten Kammpolymere mit anderen Zusatzmitteln, wie z.B. weiteren Dispergiermitteln, gut kompatibel sind.

Weitere Aspekte der Erfindung sind Gegenstand weiterer unabhängiger Ansprüche. Besonders bevorzugte Ausführungsformen der Erfindung sind Gegenstand der abhängigen Ansprüche.

**Wege zur Ausführung der Erfindung**

Ein erster Aspekt der Erfindung betrifft die Verwendung eines Kammpolymers zur Erhöhung der Fliessgeschwindigkeit und/oder zur Reduktion der Viskosität einer mineralischen Bindemittelzusammensetzung, wobei das Kammpolymer eine Hauptkette umfassend Säuregruppen aufweist und an der Hauptkette Seitenketten angebunden sind, und wobei ein durchschnittliches zahlengemitteltes Molekulargewicht sämtlicher Seitenketten 120 - 1'000 g/mol beträgt, und ein Molverhältnis der Säuregruppen zu den Seitenketten im Bereich von 0.5 - 2 liegt.

Als Mass für die Fliessgeschwindindigkeit wird vorliegend die $t_{500}$-Zeit gemäss DIN EN 12350-8:2010-12 ("Prüfung von Frischbeton - Teil 8: Selbstverdichtender Beton - Setzfliessversuch") betrachtet. Die $t_{500}$-Zeit ist im Wesentlichen die Zeit in welcher mit der angemachten oder verarbeitbaren mineralischen Bindemittelzusammensetzung ein Setzfliessmasses von 500 mm (Durchmesser) erreicht wird. Je kürzer die $t_{500}$-Zeit, desto grösser die Fliessgeschwindigkeit.

Entsprechend der DIN EN 12350-8:2010-12 ist die Fliessgeschwindingkeit zudem ein Mass für die Viskosität. Je kürzer die $t_{500}$-Zeit, desto höher die Fliessgeschwindigkeit und desto geringer die Viskosität der mineralischen Bindemittelzusammensetzung.

Bei der erfindungsgemäßen Verwendung des Kammpolymers zeigt eine mit Wasser angemachte mineralische Bindemittelzusammensetzung eine erhöhte Fliessgeschwindigkeit und/oder geringere Viskosität. Das bedeutet, dass die Zusammensetzung nach Zugabe des erfindungsgemässen Kammpolymers schneller fliesst oder eine geringere Viskosität aufweist im Vergleich mit einer analogen Zusammensetzung, die jedoch das Kammpolymer nicht enthält, oder im Vergleich mit einer analogen Zusammensetzung die ein nicht erfindungsgemässes Kammpolymer enthält.

Bevorzugt beeinflusst dass Kammpolymer bei der erfindungsgemässen Verwendung und einer Dosierung von 1 Gew.-% bezogen auf den Bindemittelgehalt die Fliessgrenze und/oder das Setzfliessmass der mineralischen Bindemittelzusammensetzung, gemessen nach DIN EN 12350-8:2010-12, um weniger als 15%, insbesondere weniger als 10%, bevorzugt weniger als 5% im Speziellen weniger als 2% oder weniger als 1%. Dies bedeutet, dass das Setzmass und/oder die Fleissgrenze der mineralischen Bindemittelzusammensetzung nach Zugabe von 1 Gew.-% des erfindungsgemässen Kammpolymers um weniger als 15%, insbesondere weniger als 10%, bevorzugt weniger als 5% im Speziellen weniger als 2% oder weniger als 1%, vom Setzmass einer analogen Zusammensetzung, die das erfindungsgemässe Kammpolymer nicht enthält, abweicht.

Erfindungsgemäss ist ein durchschnittliches zahlengemitteltes Molekulargewicht ($M_n$) der Seitenketten 120 - 1'000 g/mol. Dabei ist es möglich, dass nebst Seitenketten mit einem Molekulargewicht im Bereich von 120 - 1'000 g/mol auch solche mit einem Molekulargewicht von weniger als 120 g/mol und/oder mehr als 1'000 g/mol vorliegen. Im Durchschnitt ist das zahlengemitteltes Molekulargewicht ($M_n$) sämtlicher -Seitenketten aber stets im Bereich von 120 - 1'000 g/mol.

Gemäss einer vorteilhaften Ausführungsform ist ein maximales zahlengemitteltes Molekulargewicht der Seitenketten kleiner als 1'000 g/mol. In diesem Fall liegen keine Seitenketten mit einem zahlengemittelten Molekulargewicht über 1'000 g/mol vor.

Bevorzugt liegt ein durchschnittliches zahlengemitteltes Molekulargewicht ($M_n$) der Seitenketten im Bereich von 160 - 900 g/mol, bevorzugt 250 - 800 g/mol, insbesondere 300 - 750 g/mol, im Speziellen 400 - 600 g/mol oder 450 - 550 g/mol. Damit wird eine optimale Erhöhung der Fliessgeschwindigkeit erreicht und zugleich der Einfluss auf das Setzmass minimiert.

Für spezielle Anwendungen können aber auch andere Molekulargewichte geeignet sein.

Das durchschnittliche gewichtsgemittelte Molekulargewicht ($M_W$) und das durchschnittliche zahlengemittelte Molekulargewicht ($M_n$) wird vorliegend durch Gel-Permeations-Chromatographie (GPC) mit Polyethylenglycol (PEG) als Standard bestimmt. Diese Technik ist dem Fachmann an sich bekannt.

Das Molverhältnis der Säuregruppen zu den Seitenketten liegt insbesondere im Bereich von 0.75 - 1.7, speziell 0.8 - 1.6, insbesondere 0.85 - 1.5 oder 0.9 - 1.2.

Mit Vorteil sind die Seitenketten über Ester-, Ether-, Amid- und/oder Imidgruppen an die Hauptkette gebunden. Bevorzugt sind Ester-, Ether- und/oder Amidgruppen, insbesondere Ester und/oder Ethergruppen.

Insbesondere enthalten die Seitenketten Polyalkylenoxid-Seitenketten. Bevorzugt sind bestehen die Seitenketten zu wenigstens 50 Mol-%, insbesondere wenigstens 75 Mol-%, bevorzugt wenigstens 95 Mol-%, im Speziellen wenigstens 98 Mol.-% oder 100 Mol-%, aus Polyalkylenoxid-Seiten ketten.

Bevorzugt beträgt ein Anteil an Ethylenoxideinheiten in den Polyalkylenoxid-Seitenketten, bezogen auf sämtliche in den Seitenketten vorhandenen Alkylenoxideinheiten, mehr als 90 Mol-%, insbesondere mehr als 95 Mol-%, bevorzugt mehr als 98 Mol-%, im Speziellen 100 Mol-%.

Insbesondere weisen die Polyalkylenoxid-Seitenketten keine hydrophoben Gruppen, insbesondere keine Alkylenoxide mit drei oder mehr Kohlenstoffatomen, auf.

Ein hoher Anteil an Ethylenoxideinheiten oder ein geringer Gehalt an Alkylenoxiden mit drei oder mehr Kohlenstoffatomen reduziert die Gefahr von unerwünschtem Lufteintrag.

Die Polyalkylenoxid-Seitenketten weisen insbesondere eine Struktur gemäss Formel $-[AO]_n-R^a$ auf. Dabei ist insbesondere A = $C_2$- bis $C_4$-Alkylen. $R^a$ steht bevorzugt für H, eine $C_1$- bis $C_{20}$-Alkylgruppe, -Cyclohexylgruppe oder -Alkylarylgruppe. Mit Vorteil ist n = 2 - 250.

Der Begriff "Säuregruppen" umfasst vorliegend insbesondere Carboxygruppen, Sulfonsäuregruppen, Phosphorsäuregruppen und/oder Phosphonsäuregruppen. Die Säuregruppen können jeweils in protonierter Form, in deprotonierter Form, z.B. als Anion, und/oder in Form eines Salzes mit einem Gegenion oder Kation vorliegen. Die Säuregruppen können also z.B. teilweise oder vollständig neutralisiert vorliegen.

Die Säuregruppen weisen insbesondere eine Struktur gemäss Formel -COOM, $-SO_2-OM$, $-O-PO(OM)_2$ und/oder $-PO(OM)_2$ auf. Ganz besonders bevorzugt weisen die Säuregruppen eine Struktur gemäss der Formel -COOM auf. Jedes M steht dabei unabhängig von den übrigen für H, ein Alkalimetallion, ein Erdalkalimetallion, ein zwei oder dreiwertiges Metallion, ein Ammoniumion oder eine organische Ammoniumgruppe.

Falls M eine organische Ammoniumgruppe ist, leitet sich diese insbesondere von Alkylaminen oder von C-hydroxylierten Aminen, insbesondere von Hydroxyalkylaminen, wie z.B. Ethanolamin, Diethanolamin oder Triethanolamin, ab.

Ein gewichtsgemitteltes Molekulargewicht ($M_w$) des Kammpolymers beträgt insbesondere 5'000 - 150'000 g/mol, bevorzugt 10'000 - 100'000 g/mol,. Ein zahlengemitteltes Molekulargewicht ($M_n$) des Kammpolymers beträgt mit Vorteil 3000 - 100'000 g/mol, insbesondere 8'000 - 70'000 g/mol.

Das Kammpolymer umfasst bevorzugt folgende Teilstruktureinheiten oder besteht daraus:

a) a Molanteile einer Teilstruktureinheit **S1** der Formel (I)

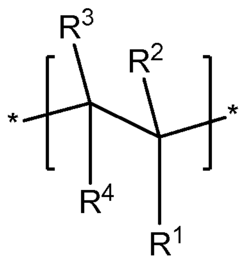

(I)

b) b Molanteile einer Teilstruktureinheit **S2** der Formel (II)

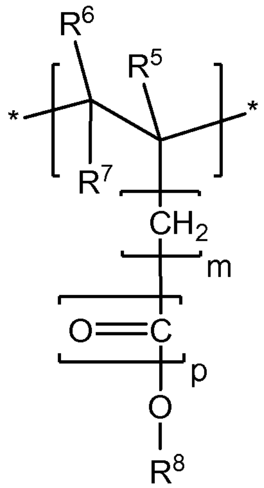

(II)

c) optional c Molanteile einer Teilstruktureinheit **S3** der Formel (III)

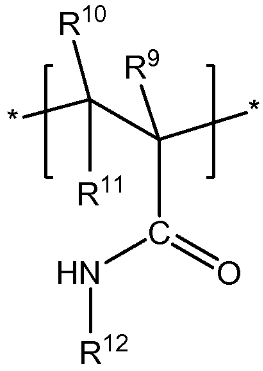

(III)

d) optional d Molanteile einer Teilstruktureinheit **S4** der Formel (IV)

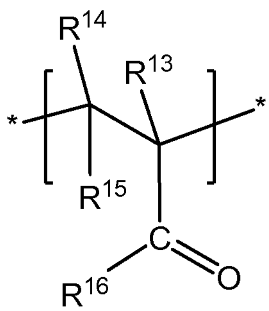

(IV)

wobei

$R^1$, jeweils unabhängig voneinander, für -COOM, $-SO_2-OM$, $-O-PO(OM)_2$ und/oder $-PO(OM)_2$ steht,

$R^2$, $R^3$, $R^5$, $R^6$, $R^9$, $R^{10}$, $R^{13}$ und $R^{14}$ jeweils unabhängig voneinander, für H oder eine Alkylgruppe mit 1 bis 5 Kohlenstoffatomen stehen,

$R^4$, $R^7$, $R^{11}$ und $R^{15}$, jeweils unabhängig voneinander, für H, -COOM oder eine Alkylgruppe mit 1 bis 5 Kohlenstoffatomen stehen,

M, unabhängig voneinander, $H^+$, ein Alkalimetallion, ein Erdalkalimetallion, ein zwei oder dreiwertiges Metallion, ein Ammoniumion, eine organische Ammoniumgruppe,

m = 0, 1 oder 2 ist,

p = 0 oder 1 ist,

$R^8$ und $R^{12}$, jeweils unabhängig voneinander, für eine $C_1$- bis $C_{20}$-Alkylgruppe, -Cycloalkylgruppe, -Alkylarylgruppe oder für eine Gruppe der Formel $-[AO]_n-R^a$ steht, wobei A = $C_2$- bis $C_4$-Alkylen, $R^a$ für H, eine $C_1$- bis $C_{20}$-Alkylgruppe, -Cyclohexylgruppe oder -Alkylarylgruppe steht, und n = 2 - 250,

$R^{16}$, unabhängig voneinander, für $NH_2$, $-NR^bR^c$, $-OR^dNR^eR^f$ stehen,

wobei $R^b$ und $R^c$, unabhängig voneinander, für

eine $C_1$- bis $C_{20}$-Alkylgruppe, -Cycloalkylgruppe -Alkylaryl-gruppe oder -Arylgruppe stehen,

oder für eine Hydroxyalkylgruppe oder für eine Acetoxyethyl- ($CH_3$-CO-O-$CH_2$-$CH_2$-) oder eine Hydroxy-isopropyl- (HO-CH($CH_3$)-$CH_2$-) oder eine Acetoxyisopropylgruppe ($CH_3$-CO-O-CH($CH_3$)-$CH_2$-) stehen;

oder $R^b$ und $R^c$ bilden zusammen einen Ring, von dem der Stickstoff ein Teil ist, um einen Morpholin- oder Imidazolinring aufzubauen;
$R^d$ eine $C_2$ -$C_4$-Alkylengruppe ist,
$R^e$ und $R^f$ je unabhängig voneinander eine $C_1$- bis $C_{20}$-Alkylgruppe, -Cycloalkylgruppe, -Alkylarygruppe, -Arylgruppe oder eine Hydroxyalkylgruppe darstellen,

und wobei a, b, c und d Molanteile der jeweiligen Teilstruktureinheiten **S1, S2, S3** und **S4** darstellen, mit

$$a/b/c/d = (0.1 - 0.9) / (0.1 - 0.9) / (0 - 0.8) / (0 - 0.8),$$

$$\text{insbesondere } a/b/c/d = (0.3 - 0.7) / (0.2 - 0.7) / (0 - 0.6) / (0 - 0.4),$$

$$\text{bevorzugt } a/b/c/d = (0.4 - 0.7) / (0.3 - 0.6) / (0.001 - 0.005) / 0$$

und mit der Massgabe dass a + b + c + d = 1 ist

Die Abfolge der Teilstruktureinheiten **S1, S2, S3** und **S4** kann alternierend, blockartig oder zufällig sein. Weiter ist es auch möglich, dass zusätzlich zu den Teilstruktureinheiten **S1, S2, S3** und **S4** weitere Teilstruktureinheiten vorliegen.

Bevorzugt weisen die Teilstruktureinheiten **S1, S2, S3** und **S4** zusammen einen Gewichtsanteil von wenigstens 50 Gew.-%, insbesondere wenigstens 90 Gew.-%, ganz besonders bevorzugt wenigstens 95 Gew.-%, am Gesamtsgewicht des Kammpolymers auf.

Ein Verhältnis von a/(b+c+d) = liegt insbesondere im Bereich von 0.5 - 2, bevorzugt 0.75 - 1.7, speziell 0.8 - 1.6, insbesondere 0.85 - 1.5 oder 0.9 - 1.2.

Insbesondere sind im Kammpolymer $R^1$ = COOM, $R^2$ = H oder $CH_3$, $R^3$ = $R^4$ = H. Damit lässt sich das Kammpolymer auf der Basis von Acryl- oder Methacrylsäuremonomeren herstellen, was aus ökonomischer Sicht interessant ist. Zudem ergibt sich mit derartigen Kammpolymeren im vorliegenden Zusammenhang eine gute Viskositätsreduktion.

Ebenfalls vorteilhaft sind Kammpolymere mit $R^1$ = COOM, $R^2$ = H, $R^3$ = H und $R^4$ = COOM. Solche Kammpolymere lassen sich auf der Basis von Maleinsäuremonomeren herstellen.

Vorteilhafterweise sind $R^5$ = H oder $CH_3$ und $R^6$ = $R^7$ = H. Derartige Kammpolymere lassen sich z.B. ausgehend von (Meth)acrylsäureestern, Vinyl-(Meth)allyl- oder Isoprenolethern herstellen.

Falls **S3** vorhanden ist, sind insbesondere $R^9$ = H oder $CH_3$ und $R^{10}$ = $R^{11}$ = H.

Falls **S4** vorhanden ist, sind insbesondere $R^{13}$ = H oder $CH_3$ und $R^{14}$ = $R^{15}$ = H.

Ganz besonders vorteilhaft stehen $R^2$ und $R^5$ für Mischungen aus H und -$CH_3$. Bevorzugt sind dabei Mischungen mit 40 - 60 Mol-% H und 40 - 60 Mol-% - $CH_3$. Falls die entsprechenden Teilstruktureinheiten vorhanden sind, gilt dies insbesondere auch für $R^9$ und $R^{13}$. Dabei ist zudem bevorzugt $R^3$ und $R^6$ gleich H, sowie, falls die entsprechenden Teilstruktureinheiten vorhanden sind, $R^9$ und $R^{13}$ gleich H.

Gemäss weiteren vorteilhaften Ausführungsform ist $R^1$ = COOM, $R^2$ = H, $R^5$ = - $CH_3$ und $R^3$ = $R^4$ = $R^6$ = $R^7$ = H.
Bei einer anderen vorteilhaften Ausführungsform ist $R^1$ = COOM, $R^2$ = $R^5$ = H oder -$CH_3$ und $R^3$ = $R^4$ = $R^6$ = $R^7$ = H.
Insbesondere steht $R^8$ und/oder $R^{12}$ für -$[AO]_n$-$R^a$, wobei bevorzugt A = $C_2$-Alkylen und/oder $R^a$ für H oder eine $C_1$-Alkylgruppe steht. Vorteilhafterweise ist n = 2 - 30, insbesondere n = 5 - 23, bevorzugt n = 8 - 22, im Speziellen n = 10-15.
Im Besonderen ist m = 0 und p = 1. Ebenfalls vorteilhaft ist m = 1 oder 2 und p = 0, wobei insbesondere $R^5$ für -$CH_3$ steht.
Bei besonders bevorzugten Kammpolymeren gilt:

a) $R^1$ steht für COOM;

b) $R^2$ und $R^5$ stehen, unabhängig voneinander, für H, -$CH_3$ oder Mischungen daraus. Ganz besonders vorteilhaft stehen $R^2$ und $R^5$ dabei für Mischungen aus H und -$CH_3$. Bevorzugt sind dabei Mischungen mit 40 - 60 Mol-% H und 40 - 60 Mol-% -$CH_3$. Bei vorhandene Teilstruktureinheiten **S3** und/oder **S4** gilt dies insbesondere auch für $R^9$ und $R^{13}$;

c) $R^3$ und $R^6$ stehen für H. Bei vorhandene Teilstruktureinheiten **S3** und/oder **S4** gilt dies insbesondere auch für $R^{10}$ und/oder $R^{14}$;

d) $R^4$ und $R^7$ stehen, unabhängig voneinander, für H oder -COOM, bevorzugt für H. Bei vorhandene Teilstruktureinheiten **S3** und/oder **S4** gilt dies insbesondere auch für $R^{11}$ und $R^{15}$;

e) $R^8$ steht für -$[AO]_n$-$R^a$, wobei bevorzugt A = $C_2$-Alkylen und/oder $R^a$ für H oder eine $C_1$-Alkylgruppe steht. Vorteilhafterweise ist n = 2 - 30, insbesondere n = 5 - 23, bevorzugt n = 8 - 22, im Speziellen n = 10 - 15. Bei vorhandener Teilstruktureinheit **S3** gilt dies insbesondere auch für $R^{12}$.

f) m = 0 und p = 1.

Die mineralische Bindemittelzusammensetzung ist insbesondere eine verarbeitbare und/oder wässrige mineralische Bindemittelzusammensetzung.
Die mineralische Bindemittelzusammensetzung enthält zumindest ein mineralisches Bindemittel. Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein.
Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von ≥ 35 Gew.-%. Insbesondere ist der Zement vom Typ CEM I, CEM II und/oder CEM III, CEM IV oder CEM V (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel zu ≥ 95 Gew.-% aus hydraulischem Bindemittel, insbesondere aus Zementklinker.
Es kann aber auch vorteilhaft sein, wenn das mineralische Bindemittel oder die mineralische Bindemittelzusammensetzung andere Bindemittel enthält oder daraus besteht. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub.
Ebenso kann die Bindemittelzusammensetzung inerte Stoffe wie z.B. Kalkstein, Quarzmehle und/oder Pigmente enthalten. In einer vorteilhaften Ausführungsform enthält das mineralische Bindemittel 5 - 95 Gew.-%, insbesondere 5 - 65 Gew.-%, besonders bevorzugt 15 - 35 Gew.-%, latenthydraulische und/oder puzzolanische Bindemittel. Vorteilhafte latenthydraulische und/oder puzzolanische Bindemittel sind Schlacke und/oder Flugasche.
In einer besonders bevorzugten Ausführungsform enthält das mineralische Bindemittel ein hydraulisches Bindemittel, insbesondere Zement oder Zementklinker, und ein latenthydraulisches und/oder puzzolanisches Bindemittel, bevorzugt Schlacke und/oder Flugasche. Der Anteil des latenthydraulischen und/oder puzzolanischen Bindemittels beträgt dabei besonders bevorzugt 5 - 65 Gew.-%, besonders bevorzugt 15 - 35 Gew.-%, während wenigstens 35 Gew.-%, im Speziellen wenigstens 65 Gew.-%, des hydraulischen Bindemittels vorliegen.
Bei der mineralischen Bindemittelzusammensetzung handelt es sich bevorzugt um eine Mörtel- oder Betonzusammensetzung, insbesondere um selbstverdichtenden Beton. Die mineralische Bindemittelzusammensetzung ist insbesondere eine verarbeitbare und/oder mit Wasser angemachte mineralischen Bindemittelzusammensetzung.

Ein Gewichtsverhältnis von Wasser zu Bindemittel in der mineralischen Bindemittelzusammensetzung liegt bevorzugt im Bereich von 0.25 - 0.7, insbesondere 0.26 - 0.65, bevorzugt 0.27 - 0.60, im Speziellen 0.28 - 0.55.

Das Kammpolymer wird mit Vorteil mit einem Anteil von 0.01 - 10 Gew.-%, insbesondere 0.1 - 7 Gew.-% oder 0.2 - 5 Gew.-%, bezogen auf den Bindemittelgehalt, eingesetzt.

Insbesondere enthält die mineralische Bindemittelzusammensetzung Mehlkorn, bevorzugt mit einem Anteil > 350 kg/$m^3$, insbesondere 400 - 600 kg/$m^3$. Ein Zementgehalt beträgt dabei insbesondere zwischen 320 und 380 kg/$m^3$.

Das Mehlkorn beinhaltet dabei insbesondere Flugasche, Metakaolin, Silicastaub und/oder inertes Gesteinsmehl.

Insbesondere ist das Mehlkorn zementfein. Insbesondere liegt ein Grösstkorndurchmesser des Mehhlkorns, z.B. gemessen durch Lasergranulometrie, unterhalb 0.125 mm.

Bevorzugt weist das Mehlkorn eine Blaine-Feinheit von wenigstens 1’000 $cm^2$/g, insbesondere wenigstens 1’500 $cm^2$/g, bevorzugt wenigstens 2’500 $cm^2$/g, noch weiter bevorzugt wenigstens 3’500 $cm^2$/g oder wenigsten 5’000 $cm^2$/g, auf.

In einem weiteren Aspekt bezieht sich die Erfindung auf eine Zusammensetzung, insbesondere eine Mörtelzusammensetzung, eine Betonzusammensetzung oder eine zementöse Zusammensetzung, enthaltend mindestens ein wie vorstehend beschriebenes Kammpolymer sowie ein mineralisches Bindemittel. Das mineralische Bindemittel ist vorzugsweise ein hydraulisches Bindemittel, insbesondere Zement, bevorzugt Portlandzement.

Die Zusammensetzung ist insbesondere eine selbstverdichtende Betonzusammensetzung.

Das Kammpolymer verfügt dabei mit Vorteil über einem Anteil von 0.01 - 10 Gew.-%, insbesondere 0.1 - 7 Gew.-% oder 0.2 - 5 Gew.-%, bezogen auf den Bindemittelgehalt.

Insbesondere enthält die Zusammensetzung Mehlkorn, bevorzugt mit einem Anteil > 350 kg/$m^3$, insbesondere 400 - 600 kg/$m^3$. Ein Zementgehalt beträgt dabei insbesondere zwischen 320 und 380 kg/$m^3$.

Ein weiterer Aspekt betrifft einen Formkörper, welcher erhältlich ist durch Aushärten einer wie vorstehend beschriebenen Zusammensetzung, insbesondere eines selbstverdichtenden Betons, nach Zugabe von Wasser.

Die verwendeten Kammpolymere lassen sich in an sich bekannter Weise herstellen.

Ein erstes und im Folgenden auch als "Polymeranaloges Verfahren" genanntes Verfahren zur Herstellung eines wie vorstehend beschriebenen Kammpolymers umfasst die Schritte:

a) Bereitstellen und/oder Herstellen eines Basispolymers **BP** umfassend oder bestehend aus einer Struktureinheit der Formel V

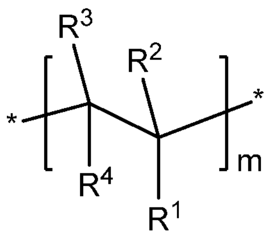

(V)

wobei

M, $R^1$, $R^2$, $R^3$ und $R^4$ wie vorstehend definiert sind, wobei $R^1$ insbesondere für -COOM steht, und

m > 2, insbesondere m = 20 - 100 ist;

b) Veresterung des Basispolymers **BP** mit einer Verbindung der Formel VI

$HO\text{-}R^8$ (VI)

c) optional Amidierung des Basispolymers **BP** mit einer Verbindung der Formel VII

$H_2N\text{-}R^{12}$ (VII)

d) optional Amidierung und/oder Veresterung des Basispolymers **BP** mit einer Verbindung der Formel VIII

$H\text{-}R^{16}$ (VIII)

zum Kammpolymer **KP,**

wobei $R^8$, $R^{12}$ und $R^{16}$ wie vorstehend definiert sind.

Das Basispolymer **BP** in Schritt a) ist insbesondere eine Polyacrylsäure, eine Polymethacrylsäure und/oder ein Copolymer aus Acrylsäure und Methacrylsäure. Ein zahlengemitteltes Molekulargewicht ($M_n$) des Basispolymers **BP** der Formel (V) ist insbesondere gleich 500 - 20'000 g/mol, insbesondere 500 - 10'000 g/mol, weiter bevorzugt 3'000 - 6'000 g/mol.

Derartige Basispolymere **BP** lassen sich in an sich bekannter Weise aus Acrylsäuremonomeren und/oder Methacrylsäuremonomeren herstellen. Es ist aber beispielsweise auch möglich, Maleinsäuremonomere und/oder Maleinsäureanhydridmonomere einzusetzen. Dies kann unter anderem aus ökonomischen und sicherheitstechnischen Aspekten vorteilhaft sein.

Das Basispolymer **BP** wird in Schritt a) insbesondere durch wässrige radikalische Polymerisation, beispielsweise von Acrylsäure und/oder Methacrylsäure, in Gegenwart eines Radikalinitiators und/oder eines Molekulargewichtsreglers hergestellt.

Der Radikalinitiator in Schritt a) umfasst insbesondere Na-, K- oder Ammoniumperoxodisulfat. Ebenfalls geeignet als Radikalinitiator in Schritt a) ist z.B. ein Redoxpaar auf Basis von $H_2O_2$ / $Fe^{2+}$.

Bevorzugt ist der Molekulargewichtsregler in Schritt a) ein Alkalisulfit oder Hydrogensulfit. Ebenfalls vorteilhaft ist ein Phosphinsäurederivat. Der Molekulargewichtsregler in Schritt a) kann auch eine organische Verbindung sein, welche eine Thiolgruppe enthält.

Entsprechende Basispolymere **BP** können grundsätzlich auch bei verschiedenen Anbietern kommerziell bezogen werden.

Zur Veresterung in Schritt b) können unter anderem Säuren und/oder Basen, beispielsweise als Katalysatoren, beigegeben werden. Mit Vorteil erfolgt die Veresterung bei erhöhten Temperaturen von 120 - 200°C, insbesondere 160 - 180°C. Dadurch kann die Ausbeute signifikant verbessert werden.

Die in Schritt b) eingesetzten Verbindungen der Formeln V, VI und VII sind kommerziell bei verschiedenen Anbietern erhältlich.

Ein zweites und im Folgenden auch "Copolymerisationsverfahren" genanntes Verfahren zur Herstellung eines wie vorstehend beschriebenen Kammpolymers umfasst eine Copolymerisation von:

a Molanteilen von Monomeren **M1** der Formel IX

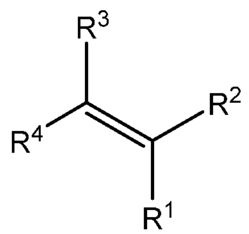

(IX)

b Molanteilen von Monomeren **M2** der Formel X

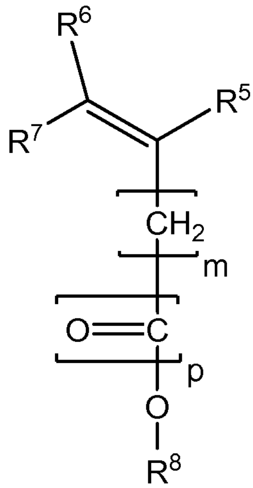

(X)

optional c Molanteilen von Monomeren **M3** der Formel XI

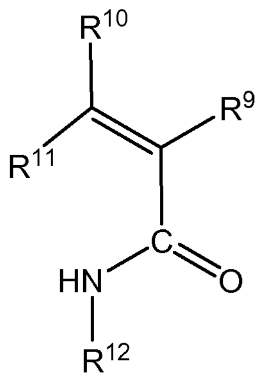

(XI)

optional d Molanteilen von Monomeren **M4** der Formel XII

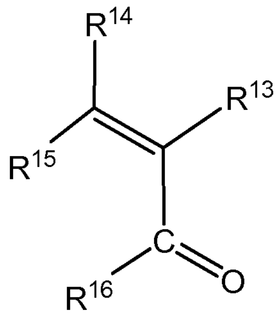

(XII)

wobei a, b, c und d die Molanteile der jeweiligen Momomere **M1, M2, M3** und **M4** darstellen,

wobei a, b, c d, M, $R^1$ - $R^{16}$, m und p wie vorstehend definiert sind.

Die Monomere **M2, M3** und **M4** können in an sich bekannter Weise durch Veresterung oder Amidierung von Acrylsäure, Methacrylsäure, Maleinsäure und/oder Maleinsäureanhydrid mit Verbindungen gemäss Formeln VI, VII oder VIII (siehe oben) hergestellt werden.

Für die Copolymerisation oder das zweite Verfahren können die bereits vorstehend im Zusammenhang mit dem ersten Verfahren genannten Radikalinitiatioren und/oder Molekulargewichtsregler eingesetzt werden.

**Ausführungsbeispiele**

1. Messmethoden

Molekulargewichtsbestimmungen erfolgten durch Gel-Permeations-chromatographie (GPC) mit wässrigen Elutionsmitteln. Ein eng kalibrierter Polyethylenglycol-Standard diente als Kalibrierung. Als Elutionsmittel wurde eine 0.1m-Natriumnitrat-Lösung vom pH = 12 verwendet. Der isokratische Fluss betrug 0.8 ml/min. IGPC-Säule: Varian Ultrahydrogel 7.8 x 300 mm. Die Peaks wurden mittels eines Differentialrefraktometers Varian RI-4 und eines UV-Detektors Waters SAT/IN-Module quantifiziert.

2. Verwendete Materialien

Folgenden Ausgangsmaterialien wurden verwendet:

- Eine Polycarbonsäure bestehend aus Acryl- und Methacrylsäureeinheiten (Molverhältnis 1:1) wurde verwendet. Die Polycarbonsäure wurde gemäss bekannten Herstellungvorschriften mittels radikalischer Polymerisation hergestellt. Die mittlere Molmasse der verwendeten Polycarbonsäure beträgt 5'000 g/mol..

- MPEG 500: Polyethylenglykol-monomethylether mit mittlerer Molmasse 500 g/mol. Ethylenoxid(EO)-Gehalt: ~11 EO-Gruppen/Mol.

3. Herstellungbeispiel für Kammpolymer

Kammpolymer **KP-1,** bestehend aus Teilstruktureinheiten **S1, S2** und **S3** im Molverhältnis von ca. 0.5/0.5/0.002, hergestellt durch polymeranaloge Veresterung einer Polycarbonsäure der Molmasse von ca. 5'000g/mol mit MPEG 500. Veresterungsgrad: 50%, bezogen auf Säuregruppen.

In einem 2 Liter fassenden 4-Halsrundkolben mit mechanischem Rührer, Thermometer, Gaseinleitungsrohr und Destillationsbrücke wurden 340g einer wässrigen Lösung der Polycarbonsäure (50 Gew.-%) vorgelegt. Nach Erwärmen auf 50°C wurden nun rasch 500g MPEG 500 zugegeben und das Gemisch innerhalb von 45 Minuten unter Stickstoff auf 165°C erwärmt und 30 Minuten bei 165°C gehalten. Danach wird 4g 50%-ige Natronlauge zugegeben und anschliessend die Temperatur auf 180°C gesteigert unter gleichzeitigem Anlegen eines Vakuums von 80mbar. Diese Rektionslösung wurde nun innerhalb von 4 Stunden bei 180°C gehalten, wobei der Innendruck auf 70mBar fiel.

Nach dem Abkühlen auf 90°C wurden 400g der Schmelze durch Einrühren in 400g Wasser in eine klare Lösung überführt. Feststoffgehalt: 49.9%

4. Frischbetonversuche

4.1 Herstellung einer Referenzprobe

Zur Herstellung einer Referenzprobe **R1** wurden Portlandzement (CEM I, 42.5; 325 kg/$m^3$), Schlacke (150 kg/$m^3$), Sikafume (25 kg/$m^3$) und Aggregate (0 - 16 mm) in einem Mischer 60 Sekunden trocken gemischt. Anschliessend wurde das Anmachwasser (w/z = 0.32), in welchem ein herkömmliches Fliessmittel (2.5 Gew.-% bezogen auf Bindemittelgehalt) gelöst vorlag, hinzugefügt und die Frischbetonzusammensetzung während 3 Minuten maschinell weiter gemischt.

Das verwendete herkömmliche Fliessmittel ist ein Polycarboxylat-Kammpolymer mit Polyethylenglykolseitenketten. Das durchschnittliche gewichtsgemittelte Molekulargewicht der Seitenketten beträgt ca. 2000 g/mol und das Molverhältnis der Säuregruppen zu den Seitenketten liegt bei ca. 4.4.

4.2 Herstellung einer Frischbetonprobe mit Kammpolymer **KP-1**

Die Probe **P1** wurde analog zur Referenzprobe hergestellt. Zusätzlich zum herkömmlichen Fliessmittel wurde jedoch 1 Gew.-% (bezogen auf Bindemittelgehalt) des Kammpolmyers **KP-1** im Anmachwasser gelöst und der Frischbetonzusammensetzung beigemischt.

4.3 Frischbetoneigenschaften

Das Fliessverhalten von Frischbetonzusammensetzungen ohne (Probe **R1)** und mit Kammpolymer **KP-1** (Probe **P1)** wurde in Setzfliessversuchen gemäss DIN EN 12350-8:2010-12 sowie mit einem Auslauftrichter nach DIN EN 12350-9:2010-12 unmittelbar nach dem Anmachen bestimmt.

Tabelle 1 gibt einen Überblick über die Ergebnisse.

*Tabelle 1: Frischbetoneigenschaften.*

| Nr. | Anteil FM [Gew.-%] | Anteil KP-1 [Gew.-%] | $t_{500}$ [s] | Setzfliessmass [mm] | Auslaufzeit [s] |
|---|---|---|---|---|---|
| **R1** | 2.5 | 0 | 21 | 720 | > 60 |
| **P1** | 2.5 | 1 | 14 | 720 | 35 |

Aus den in Tabelle 1 aufgeführten $t_{500}$-Zeiten und den Auslaufzeiten ist insbesondere ersichtlich, dass die zusätzliche Zugabe des Kammpolymers KP-1 die Viskosität der Frischbetonzusammensetzungen signifikant reduziert bzw. die Fliessgeschwindigkeit erhöht. Dies zudem ohne, dass das Setzfliessmass bzw. die Fliessgrenze beeinflusst wird.

Somit lässt sich **KP-1** gezielt zur Kontrolle der Viskosität oder Fliessgeschwindigkeit einsetzen.

Die vorstehend beschriebenen Ausführungsformen sind jedoch lediglich als illustrative Beispiele zu verstehen, welche im Rahmen der Erfindung beliebig abgewandelt werden können.

**Patentansprüche**

**1.** Verwendung eines Kammpolymers zur Erhöhung der Fliessgeschwindigkeit und/oder zur Reduktion der Viskosität

einer mineralischen Bindemittelzusammensetzung, wobei das Kammpolymer eine Hauptkette umfassend Säuregruppen aufweist und an der Hauptkette Seitenketten angebunden sind, und wobei ein durchschnittliches zahlengemitteltes Molekulargewicht ($M_n$) sämtlicher Seitenketten 120-1'000 g/mol beträgt, und ein Molverhältnis der Säuregruppen zu den Seitenketten im Bereich von 0.5 - 2 liegt.

**2.** Verwendung nach Anspruch 1, **dadurch gekennzeichnet, dass** die Seitenketten über Ester-, Ether-, Amid- und/oder Imidgruppen an die Hauptkette gebunden sind.

**3.** Verwendung nach wenigstens einem der Ansprüche 1 -2, **dadurch gekennzeichnet, dass** das durchschnittliche zahlengemittelte Molekulargewicht ($M_n$) der Seitenketten im Bereich von 250 - 800 g/mol, insbesondere 300 - 750 g/mol, im Speziellen 400 - 600 g/mol, liegt.

**4.** Verwendung nach wenigstens einem der Ansprüche 1 - 3, **dadurch gekennzeichnet, dass** die Seitenketten zu wenigstens 50 Mol-%, insbesondere wenigstens 75 Mol-%, bevorzugt wenigstens 95 Mol-% oder 100 Mol-%, aus Polyalkylenoxid-Seitenketten bestehen.

**5.** Verwendung nach Anspruch 4, **dadurch gekennzeichnet, dass** ein Anteil an Ethylenoxideinheiten in den Polyalkylenoxid-Seitenketten, bezogen auf sämtliche in den Seitenketten vorhandenen Alkylenoxideinheiten, mehr als 90 Mol-%, insbesondere mehr als 95 Mol-%, bevorzugt mehr als 98 Mol-%, im Speziellen 100 Mol-%, beträgt.

**6.** Verwendung nach wenigstens einem der Ansprüche 1 - 5, **dadurch gekennzeichnet, dass** die Seitenketten keine hydrophoben Gruppen, insbesondere keine Alkylenoxide mit drei oder mehr Kohlenstoffatomen, aufweisen.

**7.** Verwendung nach wenigstens einem der Ansprüche 1 - 6, **dadurch gekennzeichnet, dass** das Kammpolymer folgende Teilstruktureinheiten umfasst oder daraus besteht:

a) a Molanteile einer Teilstruktureinheit **S1** der Formel (I)

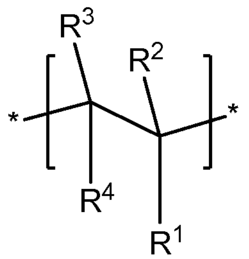

(I)

b) b Molanteile einer Teilstruktureinheit **S2** der Formel (II)

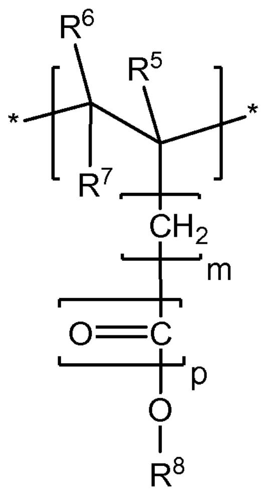

(II)

c) optional c Molanteile einer Teilstruktureinheit **S3** der Formel (III)

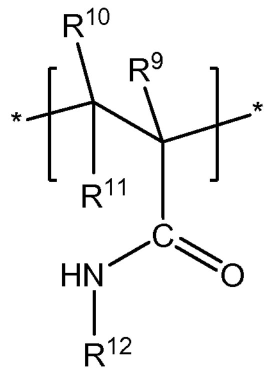

(III)

d) optional d Molanteile einer Teilstruktureinheit **S4** der Formel (IV)

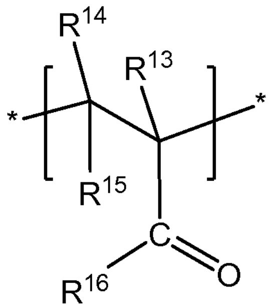

(IV)

wobei

$R^1$, jeweils unabhängig voneinander, für -COOM, $-SO_2$-OM, -O-PO$(OM)_2$ und/oder -PO$(OM)_2$ steht,
$R^2$, $R^3$, $R^5$, $R^6$, $R^9$, $R^{10}$, $R^{13}$ und $R^{14}$ jeweils unabhängig voneinander, für H oder eine Alkylgruppe mit 1 bis 5 Kohlenstoffatomen stehen,
$R^4$, $R^7$, $R^{11}$ und $R^{15}$, jeweils unabhängig voneinander, für H, -COOM oder eine Alkylgruppe mit 1 bis 5 Kohlenstoffatomen stehen,
M, unabhängig voneinander, $H^+$, ein Alkalimetallion, ein Erdalkalimetallion, ein zwei oder dreiwertiges Metallion, ein Ammoniumion, eine organische Ammoniumgruppe,
m = 0, 1 oder 2 ist,
p = 0 oder 1 ist,
$R^8$ und $R^{12}$, jeweils unabhängig voneinander, für eine $C_1$- bis $C_{20}$-Alkylgruppe, -Cycloalkylgruppe, -Alkylarylgruppe oder für eine Gruppe der Formel $-[AO]_n-R^a$ steht,

wobei A = $C_2$- bis $C_4$-Alkylen, $R^a$ für H, eine $C_1$- bis $C_{20}$-Alkylgruppe, -Cyclohexylgruppe oder -Alkylarylgruppe steht,
und n = 2 - 250,

$R^{16}$, unabhängig voneinander, für $NH_2$, $-NR^bR^c$, $-OR^dNR^eR^f$ stehen,

wobei $R^b$ und $R^c$, unabhängig voneinander, für

eine $C_1$- bis $C_{20}$-Alkylgruppe, -Cycloalkylgruppe -Alkylaryl¬gruppe oder -Arylgruppe stehen,
oder für eine Hydroxyalkylgruppe oder für eine Acetoxyethyl- ($CH_3$-CO-O-$CH_2$-$CH_2$-) oder eine Hydroxyisopropyl- (HO-CH($CH_3$)-$CH_2$-) oder eine Acetoxyisopropylgruppe ($CH_3$-CO-O-CH($CH_3$)-$CH_2$-) stehen;

oder $R^b$ und $R^c$ bilden zusammen einen Ring, von dem der Stickstoff ein Teil ist, um einen Morpholin- oder Imidazolinring aufzubauen;
$R^d$ eine $C_2$ -$C_4$-Alkylengruppe ist,
$R^e$ und $R^f$ je unabhängig voneinander eine $C_1$- bis $C_{20}$-Alkylgruppe, -Cycloalkylgruppe, -Alkylarygruppe, -Arylgruppe oder eine Hydroxyalkylgruppe darstellen,

und wobei a, b, c und d Molanteile der jeweiligen Teilstruktureinheiten **S1, S2, S3** und **S4** darstellen, mit

$$a/b/c/d = (0.1 - 0.9) / (0.1 - 0.9) / (0 - 0.8) / (0 - 0.8),$$

insbesondere $a/b/c/d = (0.3 - 0.9) / (0.1 - 0.7) / (0 - 0.6) / (0 - 0.4)$,

bevorzugt $a/b/c/d = (0.4 - 0.7) / (0.3 - 0.6) / (0.001 - 0.005) / 0$

und mit der Massgabe dass a + b + c + d = 1 ist.

**8.** Verwendung nach Anspruch 7, **dadurch gekennzeichnet, dass** $R^1$ = COOM ist; $R^2$ und $R^5$, unabhängig voneinander, für H, $-CH_3$ oder Mischungen daraus stehen; $R^3$ und $R^6$, unabhängig voneinander, für H oder $-CH_3$, bevorzugt für H, stehen; $R^4$ und $R^7$, unabhängig voneinander, für H oder -COOM, bevorzugt für H, stehen.

**9.** Verwendung nach wenigstens einem der Ansprüche 7 - 8, **dadurch gekennzeichnet, dass** $R^8$ für $-[AO]_n-R^a$ steht, A = $C_2$-Alkylen ist und $R^a$ für H oder eine $C_1$-Alkylgruppe steht, und wobei n = 2 - 30, insbesondere n = 5 - 23, bevorzugt n = 8 - 22, im Speziellen n = 10 - 15 ist.

**10.** Verwendung nach wenigstens einem der Ansprüche 7 - 9, **dadurch gekennzeichnet, dass** m = 0 und p = 1 ist sowie $R^2$ und $R^5$ jeweils für Mischungen aus 40 - 60 Mol-% H und 40 - 60 Mol-% $-CH_3$ stehen.

**11.** Verwendung nach wenigstens einem der Ansprüche 1 - 10, **dadurch gekennzeichnet, dass** das Kammpolymer mit einem Anteil von 0.01 - 10 Gew.-%, insbesondere 0.1 - 7 Gew.-% oder 0.2 - 5 Gew.-%,bezogen auf den Bindemittelgehalt, eingesetzt wird.

**12.** Verwendung nach wenigstens einem der Ansprüche 1 - 11, **dadurch gekennzeichnet, dass** es sich bei der mineralischen Bindemittelzusammensetzung um eine Mörtel- oder Betonzusammensetzung handelt, insbesondere um selbstverdichtenden Beton.

**13.** Verwendung nach wenigstens einem der Ansprüche 1 - 12, **dadurch gekennzeichnet, dass** die mineralische Bindemittelzusammensetzung Mehlkorn, bevorzugt mit einem Anteil > 350 kg/$m^3$, insbesondere 400 - 600 kg/$m^3$, enthält.

**14.** Selbstverdichtender Beton, enthaltend mindestens ein wie in einem der vorstehenden Ansprüche beschriebenes Kammpolymer.

**15.** Formkörper, erhältlich durch Aushärten eines selbstverdichtenden Betons nach Anspruch 14 nach Zugabe von Wasser.

## Claims

**1.** The use of a comb polymer for increasing the flow rate and/or for reducing the viscosity of a mineral binder composition, the comb polymer having a main chain comprising acid groups, and side chains being attached on the main chain, with the number-average molecular weight ($M_n$) of all side chains being 120 - 1000 g/mol, and with the molar ratio of the acid groups to the side chains being in the range of 0.5 - 2.

**2.** The use as claimed in claim 1, **characterized in that** the side chains are bonded to the main chain via ester, ether, amide and/or imide groups.

**3.** The use as claimed in at least one of claims 1-2, **characterized in that** the number-average molecular weight ($M_n$) of the side chains is in the range of 250 - 800 g/mol, more particularly 300 - 750 g/mol, especially 400 - 600 g/mol.

**4.** The use as claimed in at least one of claims 1-3, **characterized in that** at least 50 mol%, more particularly at least

75 mol%, preferably at least 95 mol% or 100 mol% of the side chains consist of polyalkylene oxide side chains.

5. The use as claimed in claim 4, **characterized in that** a fraction of ethylene oxide units in the polyalkylene oxide side chains, based on all alkylene oxide units present in the side chains, is more than 90 mol%, more particularly more than 95 mol%, preferably more than 98 mol%, especially 100 mol%.

6. The use as claimed in at least one of claims 1-5, **characterized in that** the side chains have no hydrophobic groups, more particularly no alkylene oxides having three or more carbon atoms.

7. The use as claimed in at least one of claims 1-6, **characterized in that** the comb polymer comprises or consists of the following structural subunits:

a) a mole fractions of a structural subunit **S1** of the formula (I)

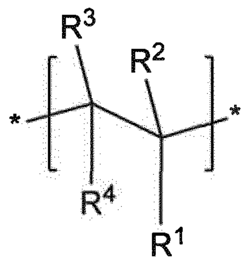

(I)

b) b mole fractions of a structural subunit **S2** of the formula (II)

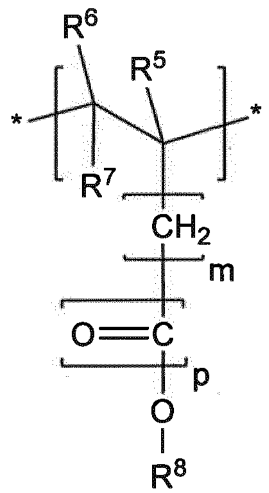

(II)

c) optionally c mole fractions of a structural subunit **S3** of the formula (III)

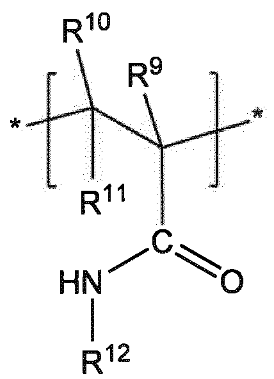

(III)

d) optionally d mole fractions of a structural subunit S4 of the formula (IV)

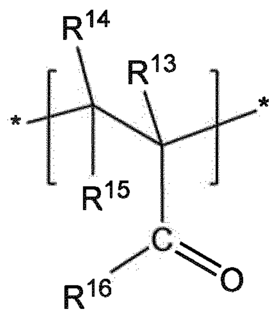

(IV)

where

$R^1$, in each case independently of any other, is -COOM, $-SO_2$-OM, -O-PO$(OM)_2$ and/or -PO$(OM)_2$,
$R^2$, $R^3$, $R^5$, $R^6$, $R^9$, $R^{10}$, $R^{13}$ and $R^{14}$, in each case independently of one another, are H or an alkyl group having 1 to 5 carbon atoms,
$R^4$, $R^7$, $R^{11}$ and $R^{15}$, in each case independently of one another, are H, -COOM or an alkyl group having 1 to 5 carbon atoms,
M, independently of any other, is $H^+$, an alkali metal ion, an alkaline earth metal ion, a di- or trivalent metal ion, an ammonium ion or an organic ammonium group,
m is 0, 1 or 2,
p is 0 or 1,
$R^8$ and $R^{12}$, in each case independently of one another, are a $C_1$ to $C_{20}$ alkyl, cycloalkyl or alkylaryl group or are a group of the formula $-[AO]_n-R^a$,

where A is $C_2$ to $C_4$ alkylene, $R^a$ is H, a $C_1$ to $C_{20}$ alkyl, cyclohexyl or alkylaryl group, and n is 2 - 250,

$R^{16}$, independently of any other, is $NH_2$, $-NR^bR^c$ or $-OR^dNR^eR^f$, where $R^b$ and $R^c$, independently of one another, are

a $C_1$ to $C_{20}$ alkyl, cycloalkyl, alkylaryl or aryl group,
or are a hydroxyalkyl group or are an acetoxyethyl ($CH_3$-CO-O-$CH_2$-$CH_2$-) or a hydroxyisopropyl (HO-CH($CH_3$)-$CH_2$-) or an acetoxyisopropyl ($CH_3$-CO-O-CH($CH_3$)-$CH_2$-) group;

or $R^b$ and $R^c$ together form a ring of which the nitrogen is a part, in order to construct a morpholine or imidazoline ring;
$R^d$ is a $C_2$-$C_4$ alkylene group,
$R^e$ and $R^f$ each independently of one another are a $C_1$ to $C_{20}$ alkyl, cycloalkyl, alkylaryl or aryl group or a hydroxyalkyl group,

and where a, b, c and d are mole fractions of the respective structural subunits **S1, S2**, **S3,** and **S4,** where

$$a/b/c/d = (0.1 - 0.9) / (0.1 - 0.9) / (0 - 0.8) / (0 - 0.8),$$

more particularly a/b/c/d = (0.3 - 0.9) / (0.1 - 0.7) / (0 - 0.6) / (0 - 0.4), preferably a/b/c/d = (0.4 - 0.7) / (0.3 - 0.6) / (0.001 - 0.005) / 0, and with the proviso that a + b + c + d is 1.

**8.** The use as claimed in claim 7, **characterized in that** $R^1$ is COOM; $R^2$ and $R^5$, independently of one another, are H, $-CH_3$ or mixtures thereof; $R^3$ and $R^6$, independently of one another, are H or $-CH_3$, preferably H; and $R^4$ and $R^7$, independently of one another, are H or -COOM, preferably H.

**9.** The use as claimed in at least one of claims 7-8, **characterized in that** $R^8$ is $-[AO]_n-R^a$, A is $C_2$ alkylene, and $R^a$ is H or a $C_1$ alkyl group, and where n is 2 - 30, more particularly n is 5 - 23, preferably n is 8 - 22, especially n is 10 - 15.

**10.** The use as claimed in at least one of claims 7-9, **characterized in that** m is 0 and p is 1 and also $R^2$ and $R^5$ are each mixtures of 40 - 60 mol% H and 40 - 60 mol% $-CH_3$.

**11.** The use as claimed in at least one of claims 1-10, **characterized in that** the comb polymer is used with a fraction of 0.01 - 10wt%, more particularly 0.1 - 7 wt% or 0.2 - 5 wt%, based on the binder content.

**12.** The use as claimed in at least one of claims 1-11, **characterized in that** the mineral binder composition is a mortar composition or concrete composition, more particularly self-compacting concrete.

**13.** The use as claimed in at least one of claims 1-12, **characterized in that** the mineral binder composition comprises fine-grain material, preferably with a fraction > 350 kg/$m^3$, more particularly 400 - 600 kg/$m^3$.

**14.** A self-compacting concrete comprising at least one comb polymer as described in any of the preceding claims.

**15.** A molding obtainable by curing a self-compacting concrete as claimed in claim 14 after addition of water.

## Revendications

**1.** Utilisation d'un polymère en peigne pour augmenter la vitesse d'écoulement et/ou pour réduire la viscosité d'une composition de liant minéral, le polymère en peigne comprenant une chaîne principale comportant des groupes acides et des chaînes latérales étant reliées à la chaîne principale, et un poids moléculaire moyen en nombre ($M_n$) de toutes les chaînes latérales étant de 120 à 1 000 g/mol, et un rapport molaire entre les groupes acides et les chaînes latérales se situant dans la plage allant de 0,5 à 2.

**2.** Utilisation selon la revendication 1, **caractérisée en ce que** les chaînes latérales sont reliées par des groupes ester, éther, amide et/ou imide à la chaîne principale.

**3.** Utilisation selon au moins l'une quelconque des revendications 1 à 2, **caractérisée en ce que** le poids moléculaire moyen en nombre ($M_n$) des chaînes latérales se situe dans la plage allant de 250 à 800 g/mol, notamment de 300 à 750 g/mol, particulièrement de 400 à 600 g/mol.

**4.** Utilisation selon au moins l'une quelconque des revendications 1 à 3, **caractérisée en ce que** les chaînes latérales sont constituées à hauteur d'au moins 50 % en moles, notamment d'au moins 75 % en moles, de préférence d'au moins 95 % en moles ou 100 % en moles, de chaînes latérales polyoxyde d'alkylène.

**5.** Utilisation selon la revendication 4, **caractérisée en ce qu'**une proportion d'unités oxyde d'éthylène dans les chaînes latérales polyoxyde d'alkylène, par rapport à toutes les unités oxyde d'alkylène présentes dans les chaînes latérales, est supérieure à 90 % en moles, notamment supérieure à 95 % en moles, de préférence supérieure à 98 % en moles, particulièrement de 100 % en moles.

**6.** Utilisation selon au moins l'une quelconque des revendications 1 à 5, **caractérisée en ce que** les chaînes latérales ne comprennent pas de groupes hydrophobes, notamment pas d'oxydes d'alkylène comprenant trois atomes de carbone ou plus.

**7.** Utilisation selon au moins l'une quelconque des revendications 1 à 6, **caractérisée en ce que** le polymère en peigne comprend les unités structurales partielles suivantes ou en est constitué :

a) a fractions molaires d'une unité structurale partielle S1 de formule (I)

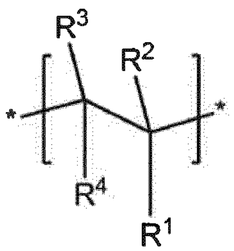

(I)

b) b fractions molaires d'une unité structurale partielle S2 de formule (II)

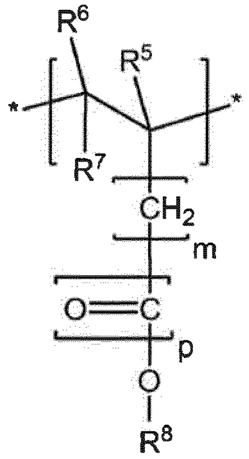

(II)

c) éventuellement c fractions molaires d'une unité structurale partielle S3 de formule (III)

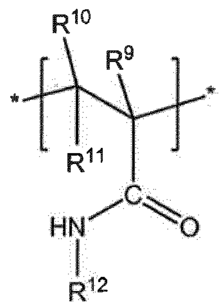

(III)

d) éventuellement d fractions molaires d'une unité structurale partielle S4 de formule (IV)

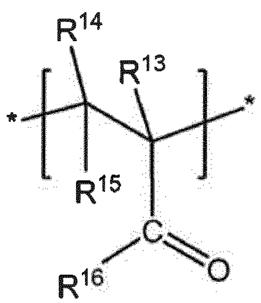

(IV)

dans lesquelles

les $R^1$ représentent, chacun indépendamment les uns des autres, -COOM, $-SO_2-OM$, $-O-PO(OM)_2$ et/ou $-PO(OM)_2$,

les $R^2$, $R^3$, $R^5$, $R^6$, $R^9$, $R^{10}$, $R^{13}$ et $R^{14}$ représentent, chacun indépendamment les uns des autres, H ou un groupe alkyle de 1 à 5 atomes de carbone,

les $R^4$, $R^7$, $R^{11}$ et $R^{15}$ représentent, chacun indépendamment les uns des autres, H, -COOM ou un groupe alkyle de 1 à 5 atomes de carbone,

les M représentent, indépendamment les uns des autres, $H^+$, un ion de métal alcalin, un ion de métal alcalinoterreux, un ion métallique bi- ou trivalent, un ion ammonium, un groupe ammonium organique,

m = 0, 1 ou 2,

p = 0 ou 1,

$R^8$ et $R^{12}$ représentent, chacun indépendamment l'un de l'autre, un groupe alkyle, un groupe cycloalkyle, un groupe alkylaryle en $C_1$ à $C_{20}$ ou un groupe de formule - $[AO]_n-R^a$,

avec A = alkylène en $C_2$ à $C_4$, $R^a$ représentant H, un groupe alkyle, un groupe cyclohexyle ou un groupe alkylaryle en $C_1$ à $C_{20}$,
et n = 2 à 250,

les $R^{16}$ représentent, indépendamment les uns des autres, $NH_2$, $-NR^bR^c$, $-OR^dNR^eR^f$,

$R^b$ et $R^c$ représentant, indépendamment l'un de l'autre,

un groupe alkyle, un groupe cycloalkyle, un groupe alkylaryle ou un groupe aryle en $C_1$ à $C_{20}$, ou un groupe hydroxyalkyle ou un groupe acétoxyéthyle ($CH_3$-CO-O-$CH_2$-$CH_2$-) ou hydroxyisopropyle (HO-CH($CH_3$)-$CH_2$-) ou acétoxyisopropyle ($CH_3$-CO-O-CH($CH_3$)-$CH_2$-);

ou $R^b$ et $R^c$ forment ensemble un cycle duquel l'azote fait partie, afin de former un cycle morpholine ou imidazoline ;
$R^d$ est un groupe alkylène en $C_2$-$C_4$,
$R^e$ et $R^f$ représentent chacun indépendamment l'un de l'autre un groupe alkyle, un groupe cycloalkyle, un groupe alkylaryle, un groupe aryle ou un groupe hydroxyalkyle en $C_1$ à $C_{20}$,

et a, b, c et d représentent les fractions molaires des unités structurales partielles S1, S2, S3 et S4 respectives, avec

$$a/b/c/d = (0,1 \text{ à } 0,9)/(0,1 \text{ à } 0,9)/(0 \text{ à } 0,8)/(0 \text{ à } 0,8),$$

notamment a/b/c/d = (0,3 à 0,9)/(0,1 à 0,7)/(0 à 0,6)/(0 à 0,4), de préférence a/b/c/d = (0,4 à 0,7)/(0,3 à 0,6)/(0,001 à 0,005)/0,
et à condition que a + b + c + d = 1.

**8.** Utilisation selon la revendication 7, **caractérisée en ce que** $R^1$ = COOM ; $R^2$ et $R^5$ représentent, indépendamment l'un de l'autre, H, $-CH_3$ ou leurs mélanges ; $R^3$ et $R^6$ représentent, indépendamment l'un de l'autre, H ou $-CH_3$, de préférence H ; $R^4$ et $R^7$ représentent, indépendamment l'un de l'autre, H ou - COOM, de préférence H.

**9.** Utilisation selon au moins l'une quelconque des revendications 7 à 8, **caractérisée en ce que** $R^8$ représente $-[AO]_n-R^a$, A = alkylène en $C_2$ et $R^a$ représente H ou un groupe alkyle en $C_1$, et n = 2 à 30, notamment n = 5 à 23, de préférence n = 8 à 22, particulièrement n = 10 à 15.

**10.** Utilisation selon au moins l'une quelconque des revendications 7 à 9, **caractérisée en ce que** m = 0 et p = 1, et $R^2$ et $R^5$ représentent chacun des mélanges de 40 à 60 % en moles de H et 40 à 60 % en moles de $-CH_3$.

**11.** Utilisation selon au moins l'une quelconque des revendications 1 à 10, **caractérisée en ce que** le polymère en peigne est utilisé en une proportion de 0,01 à 10 % en poids, notamment de 0,1 à 7 % en poids ou de 0,2 à 5 % en poids, par rapport à la teneur en liant.

**12.** Utilisation selon au moins l'une quelconque des revendications 1 à 11, **caractérisée en ce que** la composition de liant minéral est une composition de mortier ou de béton, notamment un béton autoplaçant.

**13.** Utilisation selon au moins l'une quelconque des revendications 1 à 12, **caractérisée en ce que** la composition de liant minéral contient de la poudre, de préférence en une proportion > 350 kg/$m^3$, notamment de 400 à 600 kg/$m^3$.

**14.** Béton autoplaçant, contenant au moins un polymère en peigne tel que décrit dans l'une quelconque des revendications précédentes.

**15.** Corps moulé, pouvant être obtenu par durcissement d'un béton autoplaçant selon la revendication 14 après ajout d'eau.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009044046 A
- US 20120095134 A1